Europäisches Patentamt

European Patent Office

Office européen des brevets

(19)

(11) Veröffentlichungsnummer : **0 192 920**
**B1**

(12) **EUROPÄISCHE PATENTSCHRIFT**

(45) Veröffentlichungstag der Patentschrift :
15.06.88

(51) Int. Cl.⁴ : **C 03 B 33/02**

(21) Anmeldenummer : 85890136.6

(22) Anmeldetag : 24.06.85

(54) Glasschneidetisch.

(30) Priorität : 25.02.85 AT 556/85

(43) Veröffentlichungstag der Anmeldung :
03.09.86 Patentblatt 86/36

(45) Bekanntmachung des Hinweises auf die Patenterteilung : 15.06.88 Patentblatt 88/24

(84) Benannte Vertragsstaaten :
DE FR GB IT

(56) Entgegenhaltungen :
FR-A- 1 314 389
FR-A- 2 302 974
US-A- 1 930 582
US-A- 2 051 698
"Glas, Österreichische Glaser-Zeitung", 44/1972,
Seite 19-21

(73) Patentinhaber : GTI Glastechnische Industrie Peter
Lisec Gesellschaft m.b.H.
Bahnhofstrasse 34
A-3363 Amstetten-Hausmening (Niederösterreich)
(AT)

(72) Erfinder : Lisec, Peter
Bahnhofstrasse 34
A-3363 Amstetten-Hausmening (AT)

(74) Vertreter : Beer, Otto, Dipl.-Ing. et al
Lindengasse 8
A-1071 Wien (AT)

**Beschreibung**

Die Erfindung betrifft einen Glasschneidetisch mit einer verfahrbaren Schneidbrücke, an der ein verfahrbarer Schneidkopf vorgesehen ist, und mit an die Glastafel anlegbaren Mitnehmern für den Transport vorgeritzter Glastafeln.

Derartige Schneidtische, die beispielsweise aus der Zeitschrift « GLAS, Österr. Glaser-Zeitung », Heft 4/1972, Seiten 19 bis 21 bekannt sind, haben für den Transport der Glastafeln in ihrer Oberfläche versenkbare Fördergurte, welche die Glastafeln in Richtung der Längserstreckung der bis etwa 7 m langen Schneidetische fördern. Diese als Fördergurte ausgebildeten Transportmittel haben mehrere Nachteile. Einmal ist für deren Betätigung und Unterstützung über eine vergleichsweise große Länge (bis zu 7 m) eine aufwendige Konstruktion nötig. Darüber hinaus besteht beim Abtransport von bereits geritzten Glastafeln, insbesondere bei dünnen Glastafeln die Gefahr, daß eine Glastafel vorzeitig im Bereich einer Kerbritzung bricht, wenn ein Transportriemen genau unterhalb einer Kerbritzung angreift und die Glastafel zwischen den einzelnen Transportriemen durchhängt. Man war daher gezwungen, in den Oberflächen von Glasschneidetischen möglichst viele Transportriemen vorzusehen, wodurch sich der Aufwand noch mehr erhöhte.

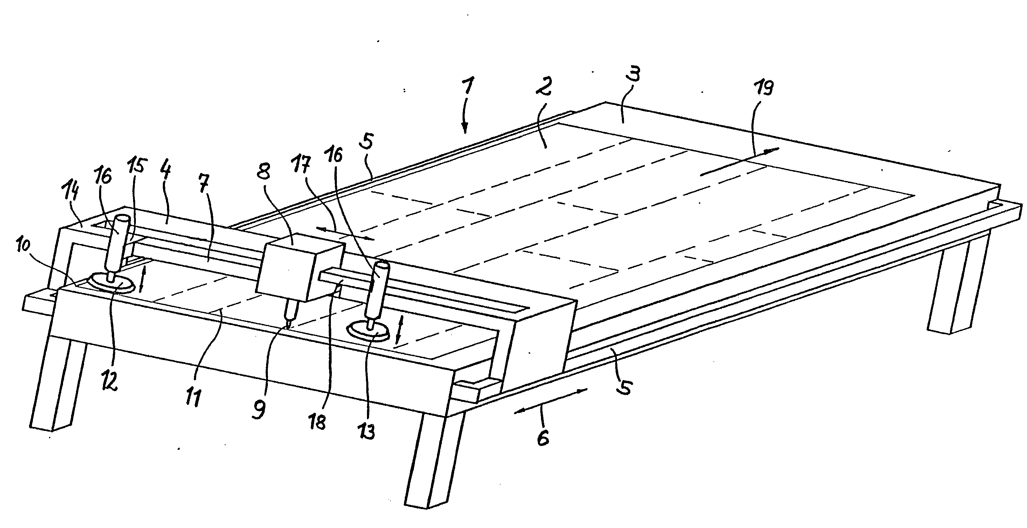

In der US-A-1 930 582 wird ein Glasschneidetisch beschrieben, der einerseits zwei Sätze von Schneidwerkzeugen zum Besäumen der Längskanten einer Glasbahn und einen entlang des Tisches verschiebbaren Wagen zum Unterteilen der Glasbahn in Querrichtung aufweist. Hiezu wird, wie aus Fig. 7 der US-A-1 930 582 ersichtlich, an ein Lineal anliegend ein Handwerkzeug quer über die Glasbahn bewegt. Die mit dem einen Querbalken verbundenen Saugköpfe dienen zum Festlegen des Lineals während der Schneidarbeit. Dabei soll der Rahmen mit dem Glas, das auf andere Art und Weise, nämlich durch die von unten angreifenden Förderrollen weiterbewegt wird, mitgenommen werden.

Bei dem aus der US-A-3 253 756 bekannten Schneidtisch für Glastafeln ist der Schneidkopf an einer ortsfesten Brücke befestigt. An dieser Schneidbrücke, die gegenüber dem Schneidtisch nicht verfahrbar ist, ist eine Positionierbrücke vorgesehen, die längs des Schneidtisches verfahrbar ist und mit heb- und senkbaren Mitnahmevorrichtungen in Form von Saugköpfen ausgerüstet ist. Die mit mehreren heb- und senkbaren Saugköpfen bestückte verschiebbare Positionsbrücke dient zum Positionieren der Glastafel gegenüber der Schneidbrücke. Die Saugköpfe der Positionierbrücke greifen an der Glastafel nur beim Zuführen derselben und in einem Bereich an, der noch nicht unter der Schneidbrücke durchgeschoben worden und somit noch nicht geritzt ist.

Der Erfindung liegt die Aufgabe zugrunde, ein Transportmittel für Glasschneidetische anzugeben, mit dem Glastafeln auf dem Glasschneidetisch bewegt und insbesondere nach dem Ritzen von diesem schonend wegbewegt werden können. Dabei soll die Oberfläche des Tisches möglichst ohne Unterbrechungen ausgebildet und am Glasschneidetisch vorhandene Bewegungsmittel ausgenützt werden.

Erfindungsgemäß wird diese Aufgabe dadurch gelöst, daß wenigstens zwei an die Glastafel anlegbare Mitnehmer an der Schneidbrücke vorgesehen sind.

Dadurch, daß bei der Erfindung an der Schneidbrücke an die Glastafeln anlegbare Mitnehmer vorgesehen sind, kann die Glastafel problemlos vom Glasschneidetisch weggeschoben werden, nachdem sie fertig geritzt worden ist. Es sind für die Betätigung der zusammen mit der Schneidbrücke als Transportmittel dienenden Mitnehmer keinerlei zusätzliche Antriebsmotore notwendig, da die Schneidbrücke ohnedies in Längsrichtung des Tisches verfahrbar ausgebildet ist.

Dadurch, daß in einer Ausführungsform der Erfindung wenigstens einer der Mitnehmer in Längserstreckung der Schneidbrücke beweglich ist, kann der Mitnehmer so positioniert werden, daß er an der Glastafel zwischen benachbarten Kerbritzungen angreift, so daß beim Transport (Wegschieben der Glastafel vom Glasschneidetisch beispielsweise zu einem Brechtisch usw.) auch bei dünnen Glastafeln keinerlei Bruchgefahr besteht.

Um das Wegschieben der Glastafel vom Schneidetisch zu erleichtern, kann im Rahmen der Erfindung vorgesehen sein, daß die Oberfläche des Tisches als Gleitfläche ausgebildet ist. In einer besonderen Ausführungsform kann diese Gleitfläche dadurch verwirklicht werden, daß in der Oberfläche des Tisches Luftaustrittsöffnungen vorgesehen sind, die zur Bildung eines Luftkissens zwischen dem Tisch und einer auf diesem angeordneten Glastafel an eine Druckluftquelle anschließbar sind.

Es sind verschiedene Ausführungsformen von Mitnehmern, wie beispielsweise an der in Förderrichtung gesehen hinteren Querkante der Glastafel angreifende Schiebeleisten denkbar. Besonders bewährt hat sich aber im Rahmen der Erfindung eine Ausführungsform, bei der als Mitnehmer an wenigstens eine Unterdruckquelle anschließbare Saugteller vorgesehen sind.

Gemäß einer Ausführungsform der Erfindung ist vorgesehen, daß ein Mitnehmer an der Schneidbrücke ortsfest an deren den Bezugspunkt des Tisches benachbartem Ende angeordnet ist. Dies ist ohne weiters möglich, da Schneidetische einen Bezugspunkt haben, der in der Regel in einer Ecke derselben liegt, von welchem Bezugspunkt aus das Programm für die Bewegungen des Schneidkopfes zum Ritzen der Glastafel ausgeht. In der Regel sind im Bereich dieses Bezugspunktes keine Kerbritzungen vorgesehen, so daß keine Gefahr besteht, daß der ortsfeste Mitnehmer (z. B. Saugteller) im Bereich einer Kerbritzung an der Glastafel angreift.

Nach einer anderen Ausführungsform der Erfindung ist vorgesehen, daß der oder einer der beweglichen Mitnehmer am Schneidkopf oder dessen Führungsschlitten angeordnet ist. Diese Ausführungsform hat den Vorteil, daß für das Bewegen des Mitnehmers (z. B. des Saugtellers) in einem Bereich der Glastafel, in dem sich keine Kerbritzungen befinden, keine gesonderten Antriebe notwendig sind.

Beim erfindungsgemäßen Glasschneidetisch sind somit hinsichtlich der Anordnung und Anzahl von Mitnehmern (Saugtellern) verschiedene Ausführungsformen denkbar. Beispielsweise sind zwei Mitnehmer vorgesehen, die beide mit der Schneidbrücke starr verbunden sind, oder es sind zwei Mitnehmer vorgesehen, von welchen einer mit der Schneidbrücke starr verbunden ist und der andere z. B. mit dem Schneidkopf entlang der Schneidbrücke verfahrbar ist. Es können aber auch zwei oder mehrere Mitnehmer vorgesehen sein, die alle an der Schneidbrücke quer zur Längserstreckung des Tisches verschiebbar sind usw.

Schließlich kann im Rahmen der Erfindung vorgesehen sein, daß die Mitnehmer, insbesondere die Saugteller, durch Antriebe, insbesondere Druckmittelzylinder vertikal hebund senkbar sind. Die Antriebsmotore werden bevorzugt Pneumatikzylinder sein, da der Schneidkopf ohnedies mit einer Druckluftquelle verbunden ist, da beim Ritzen entstehender Glasstaub für gewöhnlich mittels Preßluft weggeblasen wird. Diese Druckluft kann auch zur Erzeugung des Unterdruckes für die vorzugsweise als Saugteller ausgebildeten Mitnehmer herangezogen werden, indem man einen oder mehrere Injektoren als Unterdruckquellen vorsieht.

Weitere Einzelheiten und Merkmale der Erfindung ergeben sich aus der nachstehenden Beschreibung des in der Zeichnung schematisch wiedergegebenen, erfindungsgemäßen Glasschneidetisches.

In der Zeichnung sind der Übersichtlichkeit wegen alle Antriebe und Versorgungsleitungen weggelassen worden.

Ein Schneidetisch 1 für Tafelglas 2, das auf der Oberfläche 3 des Tisches 1 aufliegt, besitzt eine Schneidbrücke 4, die über Führungen 5 durch nicht gezeigte Antriebe in Richtung des Doppelpfeiles 6, d. h. in Richtung der Längserstreckung des Schneidetisches 1 verfahrbar ist.

An der Schneidbrücke 4 ist quer zur Richtung der Längserstreckung des Schneidtisches 1 auf einer Führung 7 durch einen nicht gezeigten Antrieb verfahrbar ein Schneidkopf 8 vorgesehen. Der Schneidkopf 8 besitzt ein heb- und senk- sowie verschwenkbares Werkzeug 9, mit dem in der Glastafel 2 nach einem vorgegebenen Programm, das auf einen Bezugspunkt 10 des Schneidetisches 1 Bezug nimmt, Kerbritzungen 11 erzeugt werden.

An der Schneidbrücke 4 sind im gezeigten Ausführungsbeispiel zwei als Mitnehmer für die Glastafel 2 dienende Saugteller 12 und 13 vorgesehen. Der Saugteller 12 ist an der Schneidbrücke 4 im Bereich ihres den Bezugspunkt 10 benachbarten Endes 14 angeordnet und ist über eine Halterung 15 und einen Druckmittelzylinder (Preßluftzylinder) 16 mit der Schneidbrücke 4 verbunden. Der Saugteller 12 ist also in Richtung des Doppelpfeiles 17 nicht verfahrbar.

Der Saugteller 13 ist mit dem Schneidkopf 8 über einen Träger 18 und einen Druckmittelzylinder 16 verbunden, so daß dieser Saugteller in Richtung des Doppelpfeiles 17 zusammen mit dem Schneidkopf 8 verfahrbar ist.

Durch die Druckmittelzylinder 16 können die Saugteller 12 und 13 bei Nichtgebrauch von der Oberfläche der Glastafel 2 abgehoben werden.

Es versteht sich, daß neben den beiden im Ausführungsbeispiel gezeigten Mitnehmern, die Saugteller sind, an der Schneidbrücke 4 noch weitere, fix angeordnete und/oder zusammen mit dem Schneidkopf oder unabhängig von diesem verfahrbare Mitnehmer, die beispielsweise ebenfalls als Saugteller ausgebildet sein können, vorgesehen sein können.

Nach dem Beenden der Schneidarbeit, wenn also alle Kerbritzungen 11 in der Glastafel 2 erzeugt worden sind, wird das Ritzwerkzeug 9 des Schneidkopfes 8 von der Glastafel 2 abgehoben. Hierauf werden die Druckmittelzylinder 16 betätigt, so daß sich die Saugteller 12 und 13 an die Oberfläche der Glastafel 2 anlegen. Dabei ist besonders bei dünnen Glastafeln darauf zu achten, daß sich die Saugteller 12 und 13 nicht im Bereich von Ritzlinien 11 anlegen, was aber insoweit kein Problem ist als der den Schneidkopf 8 steuernde Rechner, in dem ja gespeichert ist, wo Kerbritzungen 11 erzeugt worden sind, auch für die Steuerung der Bewegungen des in Richtung des Doppelpfeiles 17 verfahrbaren Schneidkopfes 8 herangezogen werden kann, wenn der Saugteller 13 ausgerichtet werden soll.

Darauf wird der Antrieb für die Schneidbrücke 4 in Bewegung gesetzt und die Glastafel 2 in Richtung des Pfeiles 19 vom Schneidetisch 1 weg, beispielsweise zu einem Brechtisch geschoben.

Um dieses Verschieben der Glastafel 2 auf der Oberfläche 3 des Schneidetisches 1 zu erleichtern, kann diese Oberfläche als Gleitfläche ausgebildet sein. Eine hiefür besonders geeignete Maßnahme ist es, in der Oberfläche 3 Luftaustrittsöffnungen, die an eine Druckluftquelle anschließbar sind, vorzusehen, so daß für den Abtransport der Glastafel 2 zwischen dieser und der Oberfläche 3 des Schneidetisches 1 ein Luftkissen erzeugt werden kann.

**Patentansprüche**

1. Glasschneidetisch mit einer verfahrbaren Schneidbrücke (4), an der ein verfahrbarer Schneidkopf (8) vorgesehen ist, und mit an die Glastafel anlegbaren Mitnehmern für den Transport vorgeritzter Glastafeln (2), dadurch gekennzeichnet, daß wenigstens zwei an die Glastafel (2) anlegbare Mitnehmer (12, 13) an der Schneidbrücke (4) vorgesehen sind.

2. Tisch nach Anspruch 1, dadurch gekennzeichnet, daß wenigstens einer der Mitnehmer (13) in Richtung (Pfeil 17) der Längserstreckung der Schneidbrücke (4) beweglich ist.

3. Tisch nach Anspruch 1 oder 2, dadurch gekennzeichnet, daß die Oberfläche (3) des Tisches (1) als Gleitfläche ausgebildet ist.

4. Tisch nach Anspruch 3, dadurch gekennzeichnet, daß in der Oberfläche (3) des Tisches (1) Luftaustrittsöffnungen vorgesehen sind, die zur Bildung eines Luftkissens zwischen dem Tisch (1) und einer auf diesem angeordneten Glastafel (2) an eine Druckluftquelle anschließbar sind.

5. Tisch nach Anspruch 1 oder 2, dadurch gekennzeichnet, daß als Mitnehmer an wenigstens eine Unterdruckquelle anschließbare Saugteller (12, 13) vorgesehen sind.

6. Tisch nach einem der Ansprüche 1 bis 3, dadurch gekennzeichnet, daß ein Mitnehmer (12) an der Schneidbrücke (4) an deren dem Bezugspunkt (10) des Tisches (1) benachbarten Ende (14) fest angeordnet ist.

7. Tisch nach einem der Ansprüche 1 bis 6, dadurch gekennzeichnet, daß der oder einer der beweglichen Mitnehmer (13) am Schneidkopf (8) oder dessen Führungsschlitten angeordnet ist.

8. Tisch nach einem der Ansprüche 1 bis 5, dadurch gekennzeichnet, daß die Mitnehmer, insbesondere die Saugteller (12, 13), durch Antriebe (16), insbesondere Druckmittelzylinder, vertikal heb- und senkbar sind.

### Claims

1. Glass cutting table with a movable cutting bridge (4), on which there is provided a movable cutting head (8), and with carriers attachable to the glass sheet for the transport of scored glass sheets (2), characterized in that at least two carriers (12, 13) attachable to the glass sheet (2) are provided on the cutting bridge (4).

2. Table according to claim 1, characterized in that at least one of the carriers (13) is movable in the direction (arrow 17) of the longitudinal extent of the cutting bridge (4).

3. Table according to claim 1 or 2, characterized in that the surface (3) of the table (1) is formed as a slide surface.

4. Table according to claim 3, characterized in that air outlet openings are provided in the surface (3) of the table (1), which are connectable to a source of pressurized air for creating an air cushion between the table (1) and a glass sheet (2) arranged thereon.

5. Table according to claim 1 or 2, characterized in that there are provided as carriers suction cups (12, 13) connectable to at least one vacuum source.

6. Table according to one of claims 1 to 3, characterised in that one carrier (12) is fixedly arranged on the cutting bridge (4) at the end (14) thereof adjacent the reference point (10) of the table (1).

7. Table according to one of claims 1 to 6, characterized in that the or one of the movable carriers (13) is arranged on the cutting head (8) or the guide carriage thereof.

8. Table according to one of claims 1 to 5, characterized in that the carriers, especially the suction cups (12, 13), are capable of being vertically raised and lowered by actuators (16), especially pressure medium cylinders.

### Revendications

1. Table de découpe de verre, avec un pont de découpe (4) déplaçable sur lequel est placée une tête de coupe (8) également déplaçable et avec des organes d'entraînement applicables contre la plaque de verre pour le transport de plaques de verre (2) pré-rayées, caractérisée par le fait qu'il existe sur le pont de découpe (4) au moins deux organes d'entraînement (12, 13) applicables contre la plaque de verre (2).

2. Table selon la revendication 1 caractérisée par le fait qu'au moins un des organes d'entraînement (13) est mobile en direction (flèche 17) de l'extension longitudinale du pont de découpe (4).

3. Table selon la revendication 1 ou 2 caractérisée par le fait que sa surface (3) est établie en surface de glissement.

4. Table selon la revendication 3 caractérisée par le fait que dans sa surface (3) sont ménagées des ouvertures de sortie d'air qui sont reliables à une source d'air comprimé pour la formation d'un coussin d'air entre ladite table (1) et une plaque de verre (2) placée sur cette dernière.

5. Table selon la revendication 1 ou 2 caractérisée par le fait que, comme organes d'entraînement, elle comporte des plateaux aspirants (12, 13) reliables à au moins une source de dépression.

6. Table selon l'une des revendications 1 à 3 caractérisée par le fait qu'un organe d'entraînement (12) est placé à demeure sur l'extrémité (14) du pont de découpe (4) voisine du point de référence (10) de ladite table (1).

7. Table selon l'une des revendications 1 à 6 caractérisée par le fait que le ou un des organes d'entraînement mobiles (13) est placé sur la tête de coupe (8) ou sur le chariot guide de cette dernière.

8. Table selon l'une des revendications 1 à 5 caractérisée par le fait que les organes d'entraînement, notamment les plateaux aspirants (12, 13), sont déplaçables verticalement en monte-et-baisse par des dispositifs de commande (16), notamment des vérins à fluide sous pression.